# FASCICULE DE BREVET EUROPEEN

(11) **EP 1 949 519 B1**
(45) Date de publication et mention de la délivrance du brevet: **27.05.2015**
(21) Numéro de dépôt: 06819166.7
(22) Date de dépôt: 27.10.2006
(51) Int. Cl.: H02J 1/10, H02M 3/158

(54) **DISPOSITIF DE CONTROLE DU TRANSFERT DE PUISSANCE ENTRE DEUX COEURS D'UN RESEAU CONTINU**
EINRICHTUNG ZUR STEUERUNG DES ENERGIETRANSFERS ZWISCHEN ZWEI KERNEN EINES GLEICHSTROMNETZES
DEVICE FOR CONTROLLING POWER TRANSFER BETWEEN TWO CORES OF A DIRECT CURRENT NETWORK

(30) Priorité: 27.10.2005 FR 0553269
(43) Date de publication de la demande: 30.07.2008
(73) Titulaire: AIRBUS OPERATIONS, 31060 Toulouse (FR); Centre National de la Recherche Scientifique, 75016 Paris (FR); Institut National Polytechnique de Toulouse (I.N.P.T), 31029 Toulouse cedex 4 (FR)
(72) Inventeur: RAULIN, Loïc, F-31830 Plaisance du Touch (FR); PIQUET, Hubert, F-81500 Garrigues (FR); ROBOAM, Xavier, F-31770 Colomiers (FR); FOCH, Henri, F-31200 Toulouse (FR); REGNIER, Jérémi, F-31000 Toulouse (FR)
(74) Mandataire: Ilgart, Jean-Christophe
(86) Numéro de dépôt international: PCT/EP2006/067853
(87) Numéro de publication internationale: WO 2007/048837

(56) Documents cités:
- EP-A- 1 248 345
- EP-A- 1 511 149
- US-A- 4 600 984
- CARICCHI F ET AL: "20 kW water-cooled prototype of a buck-boost bidirectional DC-DC converter topology for electrical vehicle motor drives" APPLIED POWER ELECTRONICS CONFERENCE AND EXPOSITION, 1995. APEC '95. CONFERENCE PROCEEDINGS 1995., TENTH ANNUAL DALLAS, TX, USA 5-9 MARCH 1995, NEW YORK, NY, USA,IEEE, US, 5 mars 1995 (1995-03-05), pages 887-892, XP010147679 ISBN: 0-7803-2482-X

## Description

### DOMAINE TECHNIQUE

La présente invention concerne un dispositif de contrôle du transfert de puissance entre deux coeurs d'un réseau continu.

Le domaine technique de l'invention est notamment celui des réseaux continus embarqués à bord d'aéronef. Mais le dispositif de l'invention peut également être utilisé avec tout type de réseaux embarqués (naval, automobile...), voire des réseaux non-embarqués par exemple dans le cadre d'applications stationnaires correspondant à un réseau fixe (réseau local continu, ferroviaire, ...)

Pour des raisons de simplification de description, on se limitera dans la suite de la description au domaine embarqué aéronautique.

Dans la suite de la description les expressions « réseaux continus » et « réseaux à courant continu » ont la même signification et peuvent donc être indifféremment employées.

### ÉTAT DE LA TECHNIQUE ANTÉRIEURE

L'intérêt du transfert d'énergie par des liaisons continues dans les réseaux embarqués est principalement dû au développement de l'électronique de puissance, notamment du fait de l'augmentation du nombre des actionneurs électromécaniques embarqués, à bord des avions. La plupart de ces actionneurs, commandés et alimentés grâce à des convertisseurs statiques, nécessite, en effet, la présence d'un étage de tension continue. Or un tel étage est obtenu à partir d'un réseau alternatif classique en utilisant une conversion alternatif-continu.

On peut remplacer toutes les unités de conversion ainsi utilisées par une distribution continue centralisée de l'énergie : cette distribution peut être une distribution directe totale (réseau haute tension continue ou HVDC) ou partielle (réseau mixte alternatif-continu).

Cependant, la mise en oeuvre de tels réseaux continus pose de nouveaux problèmes techniques compte tenu notamment de la nécessité d'assurer la stabilité de ces réseaux quelque soit le type de charge alimentée.

Pour obtenir une qualité de tension suffisante pour chaque équipement connecté à un tel réseau continu et filtrer les harmoniques générés par cet équipement, on peut utiliser un filtre, par exemple de type LC (L, : inductance ; C : capacité) placé à l'entrée de l'équipement. Dans les réseaux continus actuels les charges connectées sont souvent contrôlées par des électroniques de puissance et de commande qui absorbent, à l'échelle de la fréquence de coupure du filtre, une puissance quasi constante. Un tel phénomène est d'autant plus marqué que la régulation de l'équipement connecté est dynamiquement performante. Mais le filtre d'entrée, placé entre l'alimentation continue et le convertisseur statique régulé, est alors susceptible d'entrer en oscillation lors d'un impact de puissance. Plus le rapport L/C est élevé, ce qui est en particulier le cas lorsqu'on connecte l'équipement sur une grande longueur de câble, plus les oscillations de la tension aux bornes de la capacité du filtre sont importantes.

Le document «Méthode d'étude de la stabilité des ensembles convertisseurs-filtres» de Philippe Barrade, Hubert 5 Piquet, et Yvon Cheron (Journal de Physique III, vol 6, pages 91 à 104 janvier 1996) en fin de description met ainsi en évidence le fait que tout système constitué d'un filtre chargé par un convertisseur statique, qui absorbe une puissance constante à l'échelle de la dynamique du filtre, est un système potentiellement instable.

Les architectures de réseaux alternatifs actuels consistent à connecter tous les équipements sur un « coeur » centralisé unique au travers de lignes, qui peuvent atteindre de grandes longueurs, et devenir alors fortement impédantes.

Un « coeur » est un noeud d'interconnexion sources - charges incluant des organes de protection et de contact, dont la tension (ici continue) est stabilisée par un élément extérieur. Un coeur peut être relié à une source d'énergie : groupe alternateur + redresseur (« coeur relié »). Il peut aussi n'être relié qu'à une source de puissance (organe de stockage) ou tout simplement à un ou plusieurs autres coeurs (« coeur non relié »).

Compte tenu des phénomènes d'instabilité potentiels évoqués plus haut, de la propension de l'utilisation de grandes longueurs de câble à accentuer ce phénomène, il n'est donc ni suffisant ni judicieux de calquer l'architecture des réseaux continus sur celle des réseaux alternatifs.

Des différents documents décrivent des solutions de l'art connu ayant pour but de diminuer les risques d'instabilité.

Le document «Subsystem interaction analysis in power distribution system of next génération airlifters» de 10 Sriram Chandrasekaran, Douglas K. Lindner, Konstantin Louganshi, et Dushan Boroyevich (European power electronics conference, Lausanne, Suisse, 7-9 septembre 1999, pages 1-6) décrit un système de distribution de puissance embarqué à bord d'un avion, dans le cadre de l'initiative MEA (« More Electric Aircraft » ou avion plus électrique). La plupart des charges, comprenant des actuateurs, sont régulées en utilisant des convertisseurs de puissance bidirectionnels, qui contrôlent et conditionnent la puissance à partir d'un bus continu. La perte de stabilité en cas de perturbations importantes est analysée dans ce document pour montrer l'utilité d'une méthode d'analyse de stabilité non linéaire. Ce document cherche à établir des critères de stabilité, d'une part, pour de petites variations autour d'un point de fonctionnement donné et, d'autre part, en considérant des variations de large amplitude. Ce document met en évidence la difficulté à garantir la stabilité du système à travers le choix des paramètres de ses constituants (impédance des éléments interconnectés, bandes passantes et limitations des organes de contrôle), dans le cadre d'une structure de distribution de l'énergie en tension continue.

Le document «An active bus conditioner for a distributed power system » de Kun Xing, Jinghong Guo, Wenkang Huang, Dengming Peng, Fred C. Lee et Dusan Borojevic (Power Electronics Specialists Conference, pages 895-900, 1999 PESC 99. 30th Annual IEEE) décrit un conditionneur de bus continu actif pour un système de puissance distribué, qui compense le courant harmonique et réactif sur un bus continu et atténue activement les oscillations dans le système de puissance continu. Ce document se situe également dans le cadre d'une distribution de l'énergie en tension continue et propose la mise en oeuvre d'un équipement destiné à améliorer la qualité de la tension distribuée sur un seul bus en atténuant les fluctuations du courant que doivent fournir les sources d'énergie.

Le contexte de ces deux derniers documents est la distribution de l'énergie par l'intermédiaire d'un bus en tension continue. La conception du réseau et de ses équipements en vue de garantir la stabilité du système est très délicate et son contrôle est dans tous les cas limité.

Le document EP1511149-A2 décrit un dispositif de contrôle du transfert de puissance entre trois coeurs d'un réseau continu (qui sont des noeuds d'interconnexion sources-charge), étant placés dans des zones différentes d'un système de distribution de puissance dans lequel le réseau continu est embarqué (par exemple un véhicule hybrid ). Le dispositif comprend un convértisseur électronique de puissance composé de trois cellules de commutation interconnectées entre elles par des inductances, chaque cellule de commutation étant constituées de deux interrupteurs; un module de commande de ce convertisseur qui assure à la fois un transfert de puissance réglable à courant continu; et une stabilisation de la tension continue.

L'invention a pour objet de diminuer ces risques d'instabilité en interfaçant entre deux coeurs, placés dans des zones différentes du système dans lequel le réseau est embarqué et donc séparés par des distances importantes, une électronique de puissance et de contrôle capable de gérer les transferts de puissance entre ces coeurs, en assurant la qualité et la disponibilité de cette puissance en mode normal comme en mode dégradé (perte d'une source, surcharge de puissance sur un coeur,...).

### EXPOSÉ DE L'INVENTION

L'invention concerne un dispositif de contrôle du transfert de puissance avec les caractéristiques techniques de la revendication indépendante 1.

Le dispositif de l'invention présente les avantages suivantes :
- Il permet de concevoir des architectures de réseaux maillés à coeurs décentralisés, et de garantir la stabilité de ces réseaux en minimisant les longueurs de câbles entre les noeuds de tension stabilisés (coeurs) et les équipements, même lorsqu'il s'agit des charge déstabilisantes absorbant une puissance quasi constante.
- Il réalise, en mode normal, un transfert réglable de puissance entre deux coeurs, permettant de répartir et d'équilibrer les flux de puissance du ou des réseaux. La stabilité du courant est garantie grâce à une liaison contrôlée en courant, même si les longueurs de câbles entre coeurs sont importantes et que des mailles susceptibles d'osciller sont présentes. Les modes de connexion/déconnexion de coeurs sont donc stables et sans « à-coups ».
- Il peut jouer, en mode normal, le rôle de « stabilisateur de tension » d'un coeµr non relié à un réseau continu.
- Il peut jouer, en mode dégradé (par exemple lors de la perte d'une source), le rôle de « stabilisateur de tension » du coeur relié à une source en défaut après déconnexion du coeur vis-à-vis de cette source.

### BRÈVE DESCRIPTION DES DESSINS

La figure 1 illustre une représentation schématique du dispositif de l'invention.
La figure 2 illustre une architecture embarquée à coeur décentralisé selon l'invention.
La figure 3 illustre un exemple de réalisation du dispositif de l'invention.
La figure 4 illustre un cas de panne d'un alternateur dans une structure de l'art connu connectée par un contacteur.
La figure 5 illustre un cas de panne d'un alternateur dans une structure connectée par le dispositif de l'invention.
Les figures 6A et 6B illustrent des chronogrammes obtenus avec l'exemple de réalisation de la figure 5.

### EXPOSÉ DÉTAILLÉ DE MODES DE RÉALISATION PARTICULIERS

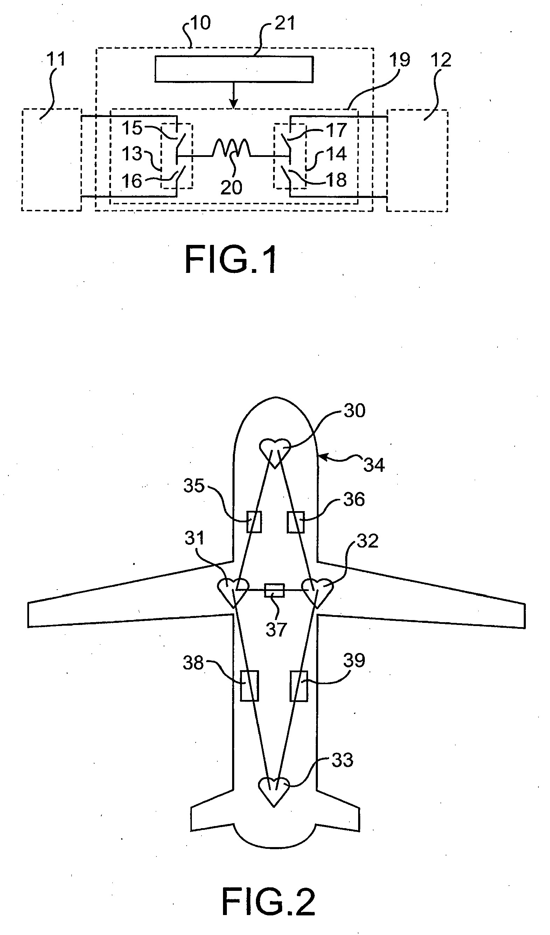

La figure 1 illustre une représentation schématique du dispositif de l'invention 10 situé entre deux coeurs, ou noeuds, 11 et 12 d'un réseau continu qui comprend :
- un convertisseur électronique de puissance 19 composé de deux cellules de commutation 13 et 14 interconnectées entre elles par une inductance 20, qui peut être constituée de l'inductance de ligne si la valeur de celle-ci est suffisante ou par un composant physique, et connectées chacune sur un coeur ; chaque cellule de commutation étant constituée de deux interrupteurs (15, 16 ; 17, 18) unidirectionnels en tension et bidirectionnels en courant, par exemple un transistor associé à une diode dans une structure anti-parallèle,
- un module 21 de commande de ce convertisseur pour assurer à la fois un transfert de puissance réglable à courant continu et une stabilisation de la tension continue des coeurs 11 et 12.

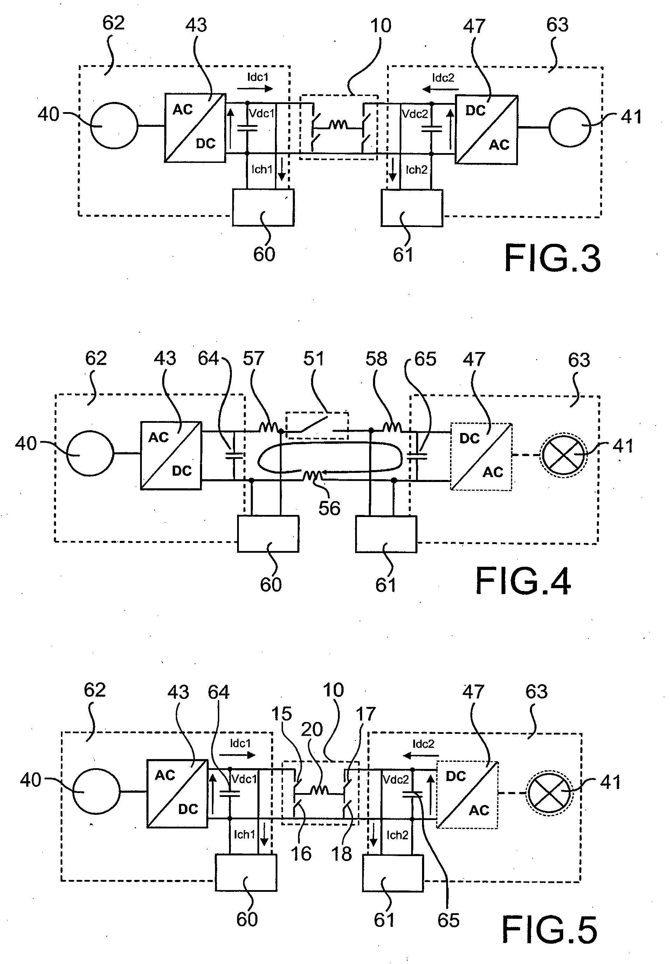

La commande des deux cellules de commutation 13 et 14 permet le contrôle quasi instantané du courant sur la ligne connectant les deux coeurs 11 et 12, avec des temps de réponse d'un ordre de grandeur de quelques périodes de commutation des cellules associées dans le dispositif de l'invention (typiquement quelques millisecondes). Ce contrôle permet :
- de mettre en place un réglage du transfert de puissance entre les deux coeurs en régime de fonctionnement normal, comme en cas de défaut sur le générateur associé à l'un d'entre eux, ce transfert de puissance pouvant intervenir indifféremment d'un des deux coeurs vers l'autre ;
- de régler et d'équilibrer les puissances fournies par les générateurs qui alimentent les coeurs ;
- de faciliter la déconnexion électrique des coeurs, car la commande des deux cellules de commutation permet d'annuler le courant dans la branche inductive du dispositif de l'invention avant de mettre à l'état « bloqué » un contacteur placé comme sur la figure 4 sur le, câble qui relie les coeurs 62 et 63 (figure 4).
- de contribuer à garantir, grâce à une commande adaptée des deux cellules de commutation du dispositif de l'invention, la stabilité de la tension fournie au niveau des coeurs.

La figure 1 illustre aussi une représentation schématique du dispositif de l'invention qui comprend une liaison tension-courant 13 reliée à une liaison courant-tension 14 par l'intermédiaire de l'inductance 20. Le premier module 13 règle le transfert de puissance (i.e. le courant continu sous une tension donnée). Le second module 14 stabilise la tension continue du coeur non relié ou du coeur relié dont la source viendrait à être en défaut (mode dégradé).

Le dispositif de l'invention remplit ainsi deux fonctions. Il permet à la fois :
- un transfert de puissance réglable à courant continu, et
- un contrôle et une stabilisation de la tension continue.

Le dispositif de l'invention est plus particulièrement orienté vers la gestion et le contrôle des échanges d'énergie entre deux coeurs décentralisés, qui ont une caractéristique fondamentale de type « source de tension » (au moins en instantané), qui peut être confirmée par un ensemble de condensateurs si c'est nécessaire.

La figure 2 illustre ainsi une architecture, embarquée à bord d'un avion 34, à coeurs décentralisés 30, 31, 32 et 33, dans laquelle plusieurs dispositifs selon l'invention 35, 36, 37, 38 et 39 sont respectivement disposés entre deux coeurs voisins.

On va considérer ci-dessus chacune des deux fonctions du dispositif de l'invention.

### • Transfert de puissance réglable

Le dispositif de l'invention permet de répartir équitablement les puissances consommées par les utilisateurs réseau sur les alternateurs.

La figure 3 illustre ainsi la répartition de la puissance consommée entre deux alternateurs 40 et 41.

Le premier alternateur 40 est relié à une première barre de distribution (premier coeur) 62 à travers un premier module de redressement alternatif-continu stabilisé 43. Une première charge 60 est reliée à cette première barre de distribution 62.

Le second alternateur 41 est relié à une seconde barre de distribution (second coeur) 63 à travers un second module de redressement alternatif-continu stabilisé 47. Une seconde charge 61 est reliée à cette seconde barre de distribution 63.

Le dispositif de l'invention 10, qui est disposé entre les deux barres de distribution 62 et 63, permet d'équilibrer les puissances fournies par les deux alternateurs 40 et 41. Lorsqu'une variation de charge a lieu sur l'un des coeurs 62, 63, l'alternateur le moins chargé vient fournir, via le dispositif de l'invention 10, une partie de la puissance nécessaire à l'alimentation des charges 60 et 61.

En fonctionnement normal, la puissance à répartir sur les alternateurs 40 et 41 peut ainsi être calculée en fonction de la somme globale des éléments consommateurs, et non plus de la somme des éléments consommateurs reliés à un seul alternateur isolé. Le point de fonctionnement de ces alternateurs 40 et 41 peut ainsi être imposé et maîtrisé. Le dispositif de l'invention 10 agit comme un « robinet » électronique capable de régler les transferts de puissance, même en présence de variations de tension de la source continue qui l'alimente.

On peut également simplifier la structure des alternateurs 40 et 41 en supprimant la régulation de tension qu'ils délivrent.

### • Contrôle et stabilisation de la tension

Le dispositif de l'invention 10 permet d'alimenter un coeur non relié à partir d'un coeur relié, ou de gérer la reconfiguration du réseau en cas de panne d'une ou plusieurs sources.

Le dispositif de l'invention, en cas de panne d'un des alternateurs, permet de réaliser un transfert de puissance vers la partie du réseau située du côté de l'alternateur en panne et de maîtriser les phénomènes transitoires et oscillatoires qui pourraient se produire.

Pour mettre en évidence l'intérêt du dispositif de l'invention on va considérer successivement une solution de l'art connu (figure 4) et la solution de l'invention (figure 5) en cas de panne d'un des alternateurs.

La figure 4 illustre le cas d'une panne du second alternateur 41 sur une structure de l'art connu connectée par un contacteur 51. Les références 56, 57 et 58 représentent respectivement des inductances de ligne et de câblage. La reprise de l'alimentation par l'intermédiaire du contacteur 51 conduit à appliquer un échelon de tension dans une maille comportant des inductances (inductances de lignes) et des capacités (capacité du redresseur MLI (modulation à largeur d'impulsion ou PWM) par exemple) susceptibles d'osciller. Le courant dans le contacteur 51 est alors totalement libre d'évoluer et aucun contrôle n'est possible. La qualité de la tension fournie aux charges 60 et 61 ne peut être garantie par le réseau. De nouvelles contraintes sont donc à prendre en compte pour la conception des équipements.

Les ensembles 62 et 63 composés de l'association d'un alternateur 40 ou 41, d'un convertisseur de génération de tension continue AC/DC 43 ou 47 et d'un condensateur 64 ou 65 placé sur la sortie (coté DC) du convertisseur correspondent à la notion de « coeur de réseau », c'est-à-dire de point du réseau où la tension est maîtrisée.

Une telle solution d'alimentation en énergie ne constitue qu'un exemple : cette alimentation peut être également obtenue directement en courant continu à l'aide d'un équipement générateur à courant continu (machine à courant continu, panneau photovoltaïque, ...).

Les équipements 60 et 61 connectés sur les coeurs de réseau 62 et 63 en constituent la charge. Les coeurs sont dans l'art connu répartis dans la structure du réseau. La distance entre coeur et équipement induit obligatoirement la présence d'une inductance de câblage. Chaque équipement 60 et 61 est muni d'un filtre d'entrée, non représenté sur la figure 4, composé classiquement d'au moins une cellule inductance-capacité. Ce filtre permet de satisfaire les exigences de limitation des perturbations harmoniques du courant absorbé par l'équipement et de prémunir l'étage d'entrée de l'équipement contre toute variation de la tension disponible en son point de connexion.

Certains équipements comportent un convertisseur statique ayant un comportement de type « charge à puissance constante ». L'association de ce convertisseur et de ses filtres d'entrée présente un caractère d'instabilité qui peut être solutionné par une commande adaptée ou l'addition de composants passifs supplémentaires. Mais la stabilisation ainsi obtenue peut être remise en cause par la présence des inductances de câblage 56, 57 et 58.

Dans un mode de fonctionnement « normal », chaque coeur alimente indépendamment les équipements qui lui sont connectés et les deux coeurs n'échangent pas de puissance. Le contacteur 51 est en position « bloquée ».

En cas de défaillance de l'un des alternateurs, pour assurer la continuité de l'alimentation des équipements qui lui sont connectés on isole le coeur défectueux puis on place le contacteur 51 en position « passante ». On cherche ainsi à transférer de la puissance électrique (66) sur une distance importante (par exemple plusieurs dizaines de mètres) à travers des lignes qui présentent une inductance significative 56. Lors du régime transitoire correspondant au passage à l'état passant du contacteur 51, l'ensemble des éléments réactifs (les capacités 64 et 65, les inductances de câblage 57 et 58 l'inductance de ligne 56, les filtres d'entrée des équipements) sont le siège d'oscillations très difficilement maîtrisables, susceptibles d'endommager les étages d'entrée des équipements connectés.

La figure 5 illustre le même cas de panne du second alternateur 41 sur une structure connectée par le dispositif de l'invention. Le transfert de l'énergie vers les charges privées d'alimentation est alors maîtrisé. Il est possible d'éviter tous les phénomènes d'oscillations mis en évidence ci-dessus. Le contrôle du courant à travers le dispositif de l'invention permet également de maîtriser les contraintes dimensionnantes des contacteurs éventuellement mis en place pour assurer les possibilités de ségrégation et d'isolement d'un défaut. La manoeuvre de tels contacteurs (placés en série sur l'inductance du dispositif de l'invention) peut être effectuée sous courant nul (ouverture) ou charge nulle (fermeture).

Les équipements 60, 61, qui forment la charge de chacun des coeurs 62, 63, sont connectés directement sur ces coeurs, de façon à minimiser les inductances de câblage, qui ne sont plus représentées sur la figure 5.

### Exemple de réalisation

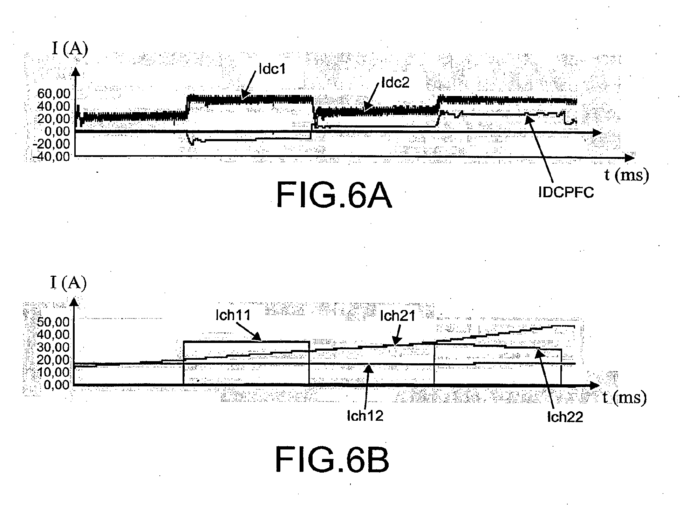

Comme illustré sur la figure 6B, les deux coeurs 62 et 63 de la figure 5 sont chargés de façon différente, et le rôle assigné au dispositif de l'invention 10 est de réaliser l'équilibrage des courants débités par les deux alternateurs 40 et 41.

Le coeur 62 est chargé par une charge 60 qui absorbe un courant comportant deux composantes illustrées sur la figure 6B : un composante impulsionnelle (Ich11) et une composante constante (Ich12). Le coeur 63 est chargé par une charge 61 qui absorbe un courant comportant deux composantes : une composante lentement croissante (Ich21) et une composante impulsionnelle (Ich22).

Comme illustré sur la figure 6A, le chronogramme permet d'apprécier le parfait équilibre obtenu au niveau des courants débités par chaque coeur (Idc1 et Idc2) ; on peut également visualiser le courant (IDCPFC) Circulant dans l'inductance du dispositif de l'invention.

Sur ces figures 6A et 6B la durée du scénario simulé est de 100 ms. La durée des différents événements et leur concomitance ne sont pas forcément réalistes. Le scénario est destiné à établir de façon qualitative la capacité de la structure proposée à faire face aux différentes situations que propose ce scénario.

## Revendications

1. Dispositif de contrôle du transfert de puissance pouvant être relié entre deux coeurs (11,12) d'un réseau continu, ces coeurs, qui sont des noeuds d'interconnexion sources-charges incluant des organes de protection et de contact, étant placés dans des zones différentes d'un système de distribution de puissance dans lequel le réseau continu est embarqué, le dispositif comprenant:
un convertisseur électronique de puissance (19) composé de deux cellules de commutation (13, 14) interconnectées entre elles par une inductance (20), chaque cellule de commutation étant constituée de deux interrupteurs,
un module (21) de commande de ce convertisseur qui assure à la fois un transfert de puissance réglable à courant continu, et une stabilisation de la tension continue,
la première cellule de commutation (13) formant une liaison tension-courant arrangée pour régler le courant continu sous une tension donnée, et
le seconde cellule de commutation (14)) formant une liaison courant-tension arrangée pour stabiliser la tension continue du coeur non relié ou du coeur relié dont la source viendrait à être en défaut.

2. Dispositif selon la revendication 1, dans lequel chaque cellule de commutation (13,14) est constituée de deux interrupteurs unidirectionnels en tension et bidirectionnels en courant.

3. Dispositif selon la revendication 2, dans lequel chaque interrupteur comprend un transistor associé à une diode dans une structure anti-parallèle.

4. Dispositif selon la revendication 1, dans lequel l'inductance (20) comprend un composant physique.

5. Aéronef comportant un dispositif selon l'une quelconque des revendications précédentes.

## Patentansprüche

1. Einrichtung zur Steuerung des Energietransfers, die zwischen zwei Kernen (11, 12) eines Gleichstromnetzes angeschlossen werden kann, wobei diese Kerne, bei denen es sich um Quellen-Lasten-Verbindungsknoten handelt, welche Schutz- und Kontaktelemente enthalten, in unterschiedlichen Bereichen eines Energieverteilungssystems angeordnet sind, in dem das Gleichstromnetz eingebettet ist, wobei die Einrichtung umfasst:
einen elektronischen Stromrichter (19) der aus zwei Schaltzellen (13, 14) besteht, die durch eine Induktivität (20) untereinander verbunden sind, wobei jede Schaltzelle von zwei Schaltern gebildet wird,
ein Modul (21) zur Steuerung dieses Stromrichters, das sowohl einen steuerbaren Gleichstrom-Energietransfer als auch eine Stabilisierung der Gleichspannung gewährleistet,
wobei die erste Schaltzelle (13) eine Spannungs-StromVerbindung bildet, die dafür ausgelegt ist, den Gleichstrom unter einer vorgegebenen Spannung zu regeln, und
die zweite Schaltzelle (14) eine Strom-Spannungs-Verbindung bildet, die dafür ausgelegt ist, die Gleichspannung des nicht angeschlossenen Kerns oder des angeschlossenen Kerns, bei dessen Quelle ein Fehler aufgetreten ist, zu stabilisieren.

2. Einrichtung nach Anspruch 1, bei der jede Schaltzelle (13, 14) von zwei Schaltern gebildet wird, die spannungsmäßig unidirektional und strommäßig bidirektional sind.

3. Einrichtung nach Anspruch 2, bei der jeder Schalter einen Transistor umfasst, der in einer antiparallellen Struktur mit einer Diode verbunden ist.

4. Einrichtung nach Anspruch 1 bei der die Induktivität (20) ein physikalisches Bauteil umfasst.

5. Flugzeug, das mit einer Einrichtung nach einem der vorhergehenden Ansprüche ausgestattet ist.

## Claims

1. Device for controlling the power transfer, which can be connected between two cores (11, 12) of a direct current network, in which said cores, which are source-charge interconnection nodes, include protective and contact members, placed in different areas of a power distribution system in which the direct current network is installed, which includes:
- an electronic power converter (19) comprised of two switching cells (13, 14) mutually interconnected by an inductance (20), wherein each switching cell consists of two switches,
- a module (21) for controlling said converter, which ensures both an controllable direct current power transfer and stabilization of the direct current voltage,
wherein the first switching cell (13) forms a voltage-current connection to regulate the direct current at a given voltage, and
wherein the second switching cell (14) forms a current-voltage connection to stabilize the direct current voltage of the core non connected or of the core connected, the source of which would have just malfunctioned.

2. Device according to claim 1, wherein each switching cell (13, 14) consists of two switches unidirectional in voltage and bidirectional in current.

3. Device according to claim 2, wherein each switch includes a transistor associated with a diode in an anti-parallel structure.

4. Device according to claim 1, wherein the inductance (20) includes a physical component.

5. Aircraft comprising a device according to any one of the previous claims.
